(19) **Europäisches Patentamt / European Patent Office / Office européen des brevets**

(11) **EP 4 600 914 A1**

(12) # EUROPEAN PATENT APPLICATION

(43) Date of publication:
**13.08.2025  Bulletin 2025/33**

(21) Application number: **24156940.9**

(22) Date of filing: **09.02.2024**

(51) International Patent Classification (IPC):
**G06V 10/62** (2022.01)   **G06V 20/52** (2022.01)
**G06V 10/82** (2022.01)   **G06V 20/17** (2022.01)

(52) Cooperative Patent Classification (CPC):
**G06V 20/52; G06V 10/62; G06V 10/82; G06V 20/17**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Helsing GmbH**
**81671 Munich (DE)**

(72) Inventors:
- WANKA, Jean-Marc
  **81671 Munich (DE)**
- SUSO, Albert
  **81671 Munich (DE)**

(74) Representative: **Rummler, Felix**
**Maucher Jenkins**
**Liebigstraße 39**
**80538 München (DE)**

(54) **NEURAL NETWORK OUTPUT STABILIZATION AND UNCERTAINTY ESTIMATION THROUGH MULTI-OBJECT-TRACKING**

(57)    According to an aspect of the present disclosure, there is provided a computer-implemented method, in particular for object tracking, the method comprising: receiving a stream of data items containing one or more data elements; associating a first data element of the one or more data elements with a unique identifier; determining at least one feature associated with the first data element; and for each feature: determining contextual information relating to the feature; and generating an output indicative of the feature based on the contextual information, wherein the output and said identifiers are useable for tracking an object represented by said first data element. In an embodiment, the output includes an average of values included in said contextual information. Determining an average enables generating a more stable output and reducing the amount of data that needs to be processed to generate the output. Thus, the method enables stabilizing the output of a neural network by tracking and averaging said values.

Fig. 1

## Description

The present invention relates to a method of processing data that may be employed for object tracking, and in particular multiple object tracking.

## Background

Neural network-based object detection allows to automatically detect objects in video streams. Video streams typically consist of video frames which are received one frame at a time. Typically, neural networks are applied to each frame individually and return detected features such as bounding boxes around observed objects or a classification into one of a plurality of predefined categories. Multi-object tracking is used to combine detections over multiple frames into so called tracks. Each track has a uniquely assigned identifier.

However, the outputs of neural networks are not stable and may vary depending on changes in lighting or perspective in the video stream, for example. Therefore, applying a frame-by-frame object detection may result in unstable results over time, resulting in an inconsistent experience for users of the neural network outputs.

In the paper "What Uncertainties Do We Need in Bayesian Deep Learning for Computer Vision?"" by Alex Kendall and Yarin Gal, 31st Conference on Neural Information Processing Systems (NIPS 2017), Long Beach, CA, USA, there is described a method to predict an image multiple times with dropout in the neural network to produce an average of the predictions to estimate an uncertainty. However, predicting the same image multiple times is computationally expensive.

The present disclosure aims to address these and other drawbacks, and particularly to provide a computer implementable method that provides stable results, an estimation of an uncertainty with less processing and an improved user experience.

## Summary of the Invention

The present invention is defined in the independent claims. The dependent claims recite selected optional features.

In the following, each of the described methods, apparatuses, examples, and aspects, which do not fully correspond to the invention as defined in the claims is thus not according to the invention and is, as well as the whole following description, present for illustration purposes only or to highlight specific aspects or features of the claims.

According to an aspect of the present disclosure, there is provided a computer-implemented method, in particular for object tracking, the method comprising: receiving a stream of data items containing one or more data elements; associating a first data element of the one or more data elements with a unique identifier; determining at least one feature associated with the first data element; and for each feature: determining at least one contextual information relating to the feature; and generating an output indicative of the feature based on the contextual information, wherein, in particular, the output and said identifiers are useable for tracking the data element, and more particularly an object represented by said first data element.

The present method enables improving the tracking of data elements, or objects represented by data elements. In an illustrative example, the data items correspond to video frames of a stream of video data. The data elements correspond to data content of interest, e.g., images of an object to be tracked. More generally, the data elements may correspond to any kind of data content of interest, e.g., image content indicative of a (spatial) object, acoustic content indicative of an object, or other data content indicative of a certain signal (e.g. pattern or characteristic). When reference is made in the present disclosure to the tracking of (spatial) objects, the teaching applies mutatis mutandis to the tracking of other data content of interest. The at least one feature associated with the data element may be an object class. The contextual information may include historical information indicating the object class in previous frames. The output may be generated based on the object class in the present and preceding frames. For example, the output may represent an average or a probability. Accordingly, the output can be used to reduce uncertainties or fluctuations when tracking an object or features thereof.

The present method can be implemented using a neural network. The output may represent the neural network output. Compared to conventional systems as described above, the neural network output is more stable and provides a better user experience.

In an embodiment, the contextual information includes historical information, and in particular historical information that indicates a status and/or presence of the feature and/or a value associated with the feature in one or more preceding data items. For example, in an embodiment where the data items correspond to image frames, the historical information may indicate whether a detected visual feature of an object represented by the data elements was also present in past image frames.

In an embodiment, the output includes an average of values included in said contextual information. Determining an average enables generating a more stable output and reducing the amount of data that needs to be processed to generate the output. Thus, the method enables stabilizing the output of a neural network by tracking and averaging said values. For example, a single average value may be determined to indicate if and to what extent a detected visual feature was present in a plurality of past image frames.

In an embodiment, the contextual information indicates a probability value associated with the feature. The probability value may indicate the probability that a feature has been (correctly) detected, and/or that a feature is present in a detected object. The probability may be derived from other contextual information, e.g. a detection of the same feature in the past (e.g., in preceding frames), or the detection of other, related features.

In an embodiment, the output includes an average of the probability values over two or more of said data items and/or over a period of time. By averaging the probability values, a more stable output can be obtained, and the amount of data to be processed can be reduced compared to processing individual probabilities for all data items.

The method may further comprise tracking the first data element, in particular an object represented by said first data element, by tracking the average of the probability values. In this embodiment, the tracking of a data element/object may be performed or enhanced by tracking the average of the probability values. Accordingly, the method may be used to enhance existing tracking-by-detection systems, including multi-object tracking systems. The method enables tracking the probability values associated with one or more objects over time. The values may include probability values output from a classification step and indicate the probability that the detected object belongs to a certain object class.

In an embodiment, the feature represents a class of the first data element, and in particular a class of an object associated with the first data element. In particular, the probability value indicates the probability of the first data element/object belonging to one of a plurality of classes. The probability may relate to a classification of an object to be tracked. For example, it may indicate the probability that the object belongs to a given class. This probability may vary across different data elements, e.g., image frames. In this embodiment, the output is based on an average of the probabilities over a plurality of the data elements (image frames). In an illustrative example, the probabilities that the feature belongs to an object of a given class may be 0.2, 0.8 and 0.6 for three consecutive data items. The average may be determined to be >0.5. Accordingly, the output indicates that the classification is more likely than not correct.

The method may further comprise determining a class probability distribution in respect of the first data element/object and/or a confidence score that the first data element/object belongs to one or more of said classes. In this embodiment, the method enables keeping track of a classification probability distribution of detected objects. In particular, the method enables calculating an entropy-based uncertainty for the classification, and also stabilising the output of the classification.

The method may further comprise re-allocating the first data element, in particular an object represented by the first data element, from a current one of said classes to a new one of said classes if an average probability that the first data element/object belongs to the current class is below a first threshold and if an average probability that the first data element/object belongs to the new class is above a second threshold. By setting thresholds for re-classifying data elements/objects based on average probabilities, the output is stabilised. Re-classifications between individual frames is inhibited unless the average probabilities reach certain thresholds. However, in such case, the method may also include indicating an uncertainty. Thus, the method enables decoupling the classification and the output of an uncertainty indicator, resulting in an improved experience for an operator of an object tracking system implementing the method.

The method may further comprise associating a weight with said contextual information, and in particular associating respective weights with one or more values included in said contextual information, wherein the output reflects said weights. In this embodiment, the contextual information is weighted to take into account the context it represents. For example, the contextual information may include historical information which indicates whether a feature was present in any preceding image frames. This information may be weighted depending on a distance, in terms of time, of the preceding frames from a current frame. More recent frames may be given more weight than earlier frames. Also, a current frame may be given more weight than past frames.

The method may further comprise determining a first weight for a current data item; determining a second weight for one or more preceding data items, in particular an average in respect of the one or more preceding data items; and optionally, dynamically adjusting the first and/or second weights while tracking first data element, in particular an object represented by the first data element. For example, the data items correspond to image frames. In this embodiment, the method may include (separately) determining the weight for a current frame and the weight for past frames, in particular an average weight for past frames. This enables adjusting the stability and sensitivity of the output. For example, if a current data item (frame) is given relatively more weight, the output becomes more sensitive to changes. If, on the other hand, an average of past frames is given relatively more weight, the output becomes more stable and fluctuates less.

In an embodiment, the data items correspond to image frames captured by a camera and the data elements correspond to images of an object contained in the image frames, wherein said contextual information includes a camera parameter, in particular a zoom setting, and/or a distance of the object from the camera, the method further comprising associating weights with said contextual information based on the camera parameter, in particular the zoom setting, and/or the distance. In this embodiment, the weighting may be performed to take into account how close an object is to a device that implements the method. For example, if the information is easier to retrieve and therefore more trustworthy when the object is close, the information from images in which the object is closer may be given more weight than information from images in which the object is further away. Similarly, the weighting may be performed on the basis of a zoom setting of a camera used for capturing images of the object. Information from images in which the object is "zoomed in" may be given more weight.

In an embodiment, the stream of data items includes data obtained from video, audio, and/or radar signals associated with a detected object. Additionally, or alternatively, the unique identifier is determined based on one or more parameters or properties associated with the detected object, in particular the object's position, movement, class, and/or visual appearance.

According to another aspect of the present disclosure, there is provided a data element tracking system, comprising: one or more sensors for generating sensor signals associated with one or more data elements, in particular an object represented by the one or more data elements; one or more storage devices; and one or more processors configured to: process the sensor signals to detect the data element; generate a plurality of data items associated with a detected data element; and perform any of the method steps described above.

According to yet another aspect of the present disclosure, there is provided a computer program product for loading into a memory of a computer, comprising instructions, that, when executed by a processor of the computer, cause the computer to execute any of the steps of the computer-implemented method described above.

**Brief description of the drawings**

The features, objects, and advantages of the present disclosure will become more apparent from the detailed description set forth below when taken in conjunction with the drawings in which:

Figure 1 schematically illustrates an environment in which a method according to an embodiment of the present disclosure can be implemented;

Figure 2 illustrates a flow chart of a method according to an embodiment of the present disclosure; and

Figure 3 illustrates a schematic block diagram of a device according to an embodiment of the present disclosure.

**Detailed description of exemplary embodiments**

Embodiments of the present disclosure provide methods that can be used to stabilize neural network outputs and improve operator experience in multi-object tracking systems. In particular, the methods may be used to enhance existing tracking-by-detection multi-object tracking systems. The methods add the capability to track values associated with detected objects over time. Such a value may be a probability value output from a classification step, the value indicating the probability of the detected object belonging to a certain object class. Tracking this value can be implemented by calculating the average based on the values determined for the same object in the present and previous frames, e.g., calculating the following average:

$$average\ x(t) = a\ average[x(t-1)] + (1-a)\ x(t)$$

wherein $a$ is a weight in the range [0,1]. By increasing $a$, the output may be made more stable, i.e., the fluctuation of output values may be reduced. By decreasing $a$, it can be more sensitive.

The average may be a simple moving average, or an exponential moving average. This enables keeping track of a running average of any feature associated with a detected object, such as bounding box sizes, class probability distributions, confidence scores, etc.

The resulting values can then be used in different ways to stabilise the output of a system implementing the method. They also enable calculating uncertainties for them. As an example, the method keeps track of the classification probability distribution of observed objects. This enables on the one hand calculating an entropy-based uncertainty for the classification, and on the other hand stabilising the output of the classification. In particular, a transition threshold can be used to ensure that a determined class is only changed if the probability of a previously believed best estimate for the class and a new best guess surpass this threshold. Accordingly, in situations where the class cannot be determined with high confidence, the output remains stable, and a switching of classes between frames is prevented. However, in this case the system output may also indicate a high uncertainty. This effectively decouples the output of uncertainty and the best guess of the state/class, resulting in an improved experience for a system operator.

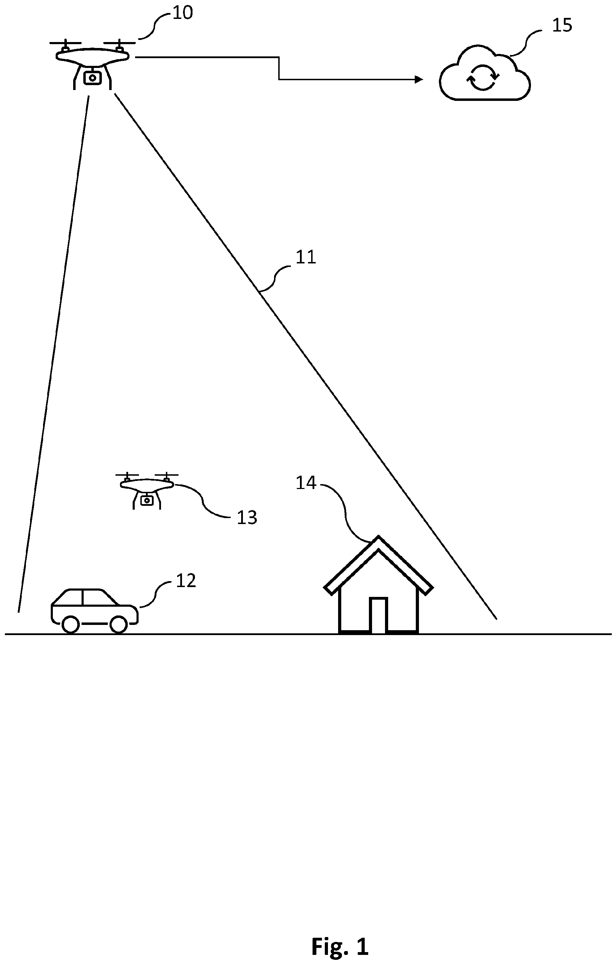

Figure 1 schematically illustrates an environment in which a method according to an embodiment of the present disclosure can be implemented. The method may be implemented in an unmanned aerial vehicle (UAV) 10 to detect and track objects. The UAV 10 may have one or more sensors, e.g., a video camera, to monitor an area corresponding to a field of view (FOV) 11 of the sensors. In the illustrated example, there are three objects within the FOV of the UAV 10, namely a car 12, a drone 13 and a house 14. Each of the objects 12, 13 and 14 belongs to one or more different object classes. The car 12 may belong to the object classes "moving object", "ground vehicle" and "passenger car". The drone 13 may belong to the object classes "moving object", "aerial vehicle" and "drone". The house 14 may belong to the object classes "stationary object", "building" and "house". These classes are illustrative only. Each object may belong to fewer or additional or different classes.

The drone 10 may be communicatively coupled to a remote server 15. The drone 10 may be configured to transmit some or all the sensor signals from its sensors to the remote server 15. The method according to the present disclosure may be partially or wholly implemented on the remote server 15.

The drone 10 is configured to process the sensor signals from its video camera to detect and track the objects 12, 13 and 14. The sensor signals correspond to a stream of video frames. Each video frame contains a representation of the objects 12, 13 and 14 visible within the FOV 11. The objects 12, 13 and 14 may not be visible all the time. For example, the drone 13 may leave and re-enter the FOV 11. The car 12, when moving relative to the UAV 10, may be temporarily obscured by other objects, e.g., trees. Also, the objects 12, 13 and 14 may be visible from different perspectives and angles at different points in time and thus have different appearances.

The drone 10, implementing the method according to an embodiment of the present disclosure, is configured to process data representing contextual information when tracking objects. Such contextual information may include historical information relating to the class of a tracked object in preceding image frames. For example, a current image frame may be processed to determine that the object 12 belongs to the class "passenger car". The contextual information, however, may indicate that the object 12 has been classified as a "truck" in a plurality of preceding image frames. In this case, the object 12 is not re-classified as "passenger car". Instead, the object 12 remains in the class "truck" until a sufficient number of subsequent frames may indicate otherwise.

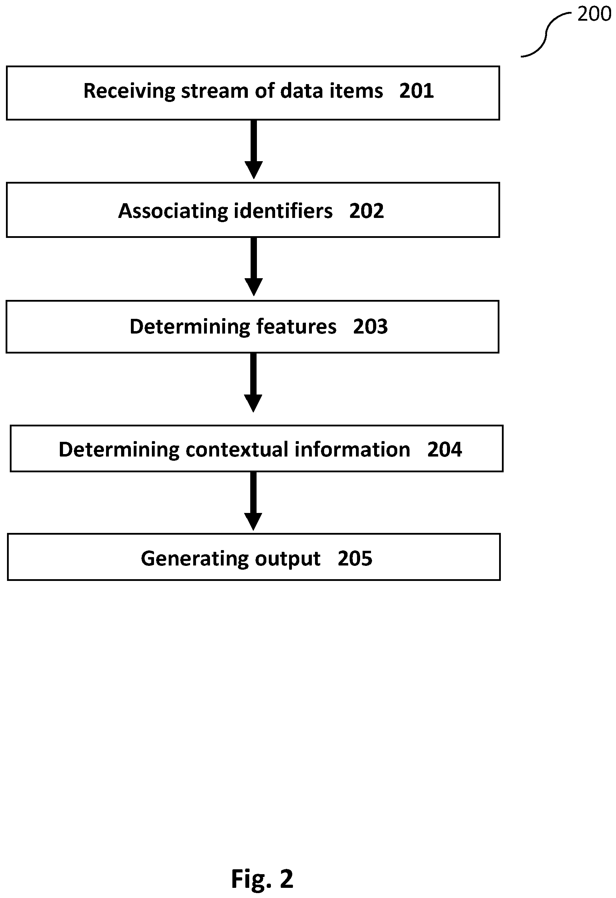

Figure 2 illustrates a flow chart of a method 200 according to an embodiment of the present disclosure. In step 201, the method receives a data stream comprising a plurality of data items. For example, the data items correspond to video frames in a stream of video data. Each data item may contain one or more data elements representing objects in an environment. For example, the data elements may correspond to images of the objects 12, 13 and 14 illustrated in Figure 1.

In step 202, the data items are processed to identify any objects represented by the data elements contained in the data items. The identification can be done using object identifiers which are assigned to objects when they are first detected. Each identifier represents a fingerprint that uniquely identifies the associated object. The identifiers may be based on or include positional information (e.g., information relating to the position, movement and pose of the object) and other information such as an object class or visual features.

In step 203, one or more features are determined for each of the data elements. For example, a given data element may represent the object 12 (Figure 1), and the feature corresponds to the object class "moving object". In another example, the feature represents a bounding box of the detected object in the stream of image frames.

In step 204, contextual information relating to the features determined in step 203 is obtained. The contextual information may include historical information, for example, a classification of the object or the size and location of the bounding box in prior image frames.

In step 205, the contextual information is used to generate an output. For example, if in a current image frame, the bounding box corresponds to bounding boxes of the same or similar sizes and locations, the bounding box of the current image frame can be generated as an output with high confidence. The output may include a confidence value, which may be indicated to a user or used otherwise in subsequent actions, e.g., for engaging an object.

The method 200 represents a continuous, iterative process. There may be a continuous stream of incoming data which is processed as described above. The method 200 may be implemented by a neural network.

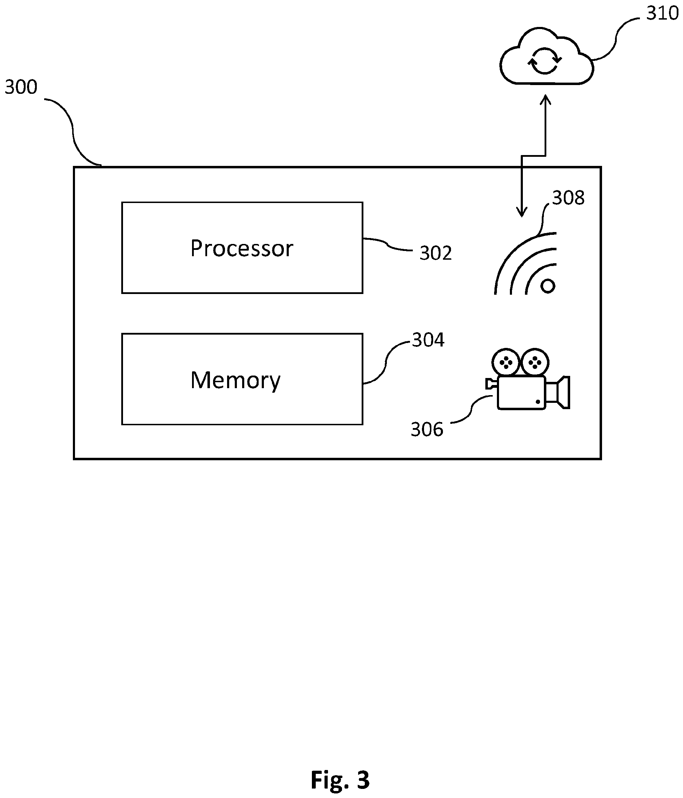

Figure 3 illustrates a schematic block diagram of a device 300 according to an embodiment of the present disclosure which may implement methods according to the present disclosure. The device 300 comprises at least one processor 302 and a memory 304. The memory 304 can be any type of memory. The device 300 optionally also comprises a sensor 306, for example a video camera, for generating a stream of sensor data, and a receiver/transmitter 308 for communicating with a remote server 310 or other devices. The processor 302, memory 304, sensor (e.g., camera) 306 and receiver/transmitter 308 are communicatively coupled with one another. The memory 304 stores instructions that, when executed by the processor 302, result in the execution, at least in part, of the methods as described herein.

Generally, methods according to the present disclosure can be applied to any incoming data stream, not only image data. In an embodiment, the method includes the following steps:

Consecutively receiving a plurality of data items, i.e., a stream of data items. The data items represent specific data content of interest. The data content can include an object in image data, a sound in audio data, a frequency pulse within a radar signal, etc. Such data content is also referred to as "data elements" in the present disclosure.

Identifying the data content of interest within the received data items. This includes associating the data content with an unambiguous identifier.

For each of the received plurality of data items, determining at least one feature of the identified data content. Examples are an object class, a bounding box, a size of a bounding box, a mode of a radar signal, etc. The determination of the feature includes a determination of a respective (per data item) probability value associated with the feature.

Determining an average of the plurality of probability values associated with the (i.e., the same) feature.

Outputting an indication of the feature based on the determined average.

Accordingly, the determination of a feature, such as the determination of an object class (e.g., detected object = car), is based on a plurality of data items of the same data stream, e.g., via an average value. A change of determination of (the status of) a feature from one frame to another (i.e., due to a high uncertainty) does not necessarily result in a change of output of the indication of the feature. Thereby, the method enables calculating uncertainties for downstream systems, such as uncertainties in respect of tracked values, which in turn can be used by downstream systems to create a more accurate estimation of the state of detected objects. Also, the method enables improving an operator experience by stabilising the visualization of the results of object detectors. In particular, the operator can expect a more consistent visualization of the results that consists of stabilised bounding boxes that change less over time, less frequently changing classifications for objects, and the capability to inspect uncertainties of predictions independently of the output values.

## Claims

1. A computer-implemented method, in particular for object tracking, the method comprising:

   receiving a stream of data items containing one or more data elements;
   associating a first data element of the one or more data elements with a unique identifier;
   determining at least one feature associated with the first data element; and
   for each feature:

   determining contextual information relating to the feature; and
   generating an output indicative of the feature based on the contextual information,

   wherein, in particular, the output and said identifier are usable for tracking the first data element, and more particularly an object represented by said first data element.

2. The method of claim 1, wherein the contextual information includes historical information, and in particular historical information that indicates a status and/or presence of the feature and/or a value associated with the feature in one or more preceding data items.

3. The method of claim 1 or 2, wherein said output includes an average of values included in said contextual information.

4. The method of any preceding claim, wherein the contextual information includes a probability value associated with the feature.

5. The method of claim 4, wherein the output includes an average of the probability values over two or more of said data items and/or over a period of time.

6. The method of claim 5, further comprising tracking said first data element, in particular an object represented by said first data element, by tracking the average of the probability values.

7. The method of any preceding claim, wherein the feature represents a class of the first data element, in particular an object associated with the first data element, and, in particular, wherein the probability value indicates the probability of the first data element belonging to one of a plurality of classes.

8. The method of claim 7, further comprising determining a class probability distribution in respect of the first data element and/or a confidence score that the first data element belongs to one or more of said classes.

9. The method of claim 7 or 8, further comprising re-allocating the data element from a current one of said classes to a new one of said classes if an average probability that the detected first data element belongs to the current class is below a first threshold and if an average probability that the detected first data element belongs to the new class is above a second threshold.

10. The method of any preceding claim, further comprising:
    associating a weight with said contextual information, and in particular associating respective weights with one or more values included in said contextual information, wherein the output reflects said weights.

11. The method of claim 10, further comprising:

    determining a first weight for a current data item;
    determining a second weight for one or more preceding data items, in particular an average in respect of the one or more preceding data items; and
    optionally, dynamically adjusting the first and/or second weights while tracking a the first data element.

12. The method of claim 10 or 11, wherein the data items correspond to image frames captured by a camera and the data elements correspond to images of an object contained in the image frames, and wherein said contextual information includes a camera parameter, in particular a zoom setting, and/or a distance of the object from the camera, the method further comprising:

associating weights with said contextual information based on the camera parameter, in particular the zoom setting, and/or the distance.

13. The method of any preceding claim,

wherein the stream of data items includes data obtained from video, audio, and/or radar signals associated with a detected data element, in particular an object, and/or

wherein said unique identifier is determined based on one or more parameters or properties associated with the detected data element, in particular the object's position, movement, class, and/or visual appearance.

14. A data element tracking system, comprising:

one or more sensors for generating sensor signals associated with a data element, such as an object;
one or more storage devices; and
one or more processors configured to:

process the sensor signals to detect the data element;
generate a plurality of data items associated with a detected data element; and
perform the method of any preceding claim.

15. A computer program product for loading into a memory of a computer, comprising instructions, that, when executed by a processor of the computer, cause the computer to execute the computer-implemented method of any of claims 1-13.

**Fig. 1**

200

| Receiving stream of data items   201 |
| :---: |

↓

| Associating identifiers   202 |
| :---: |

↓

| Determining features   203 |
| :---: |

↓

| Determining contextual information   204 |
| :---: |

↓

| Generating output   205 |
| :---: |

# Fig. 2

300

310

Processor — 302

308

304
Memory

306

**Fig. 3**

Europäisches
Patentamt

European
Patent Office

Office européen
des brevets

**EUROPEAN SEARCH REPORT**

Application Number

EP 24 15 6940

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/056365 A1 (SIVAN ISHAY [IL] ET AL) 25 February 2021 (2021-02-25) * paragraph [0074] - paragraph [0144]; figures 1-5 * | 1-15 | INV. G06V10/62 G06V20/52 G06V10/82 G06V20/17 |
| | ----- | | |
| | | | TECHNICAL FIELDS SEARCHED (IPC) |
| | | | G06V |

The present search report has been drawn up for all claims

| Place of search | Date of completion of the search | Examiner |
|---|---|---|
| The Hague | 18 July 2024 | Chehade, Thomas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 15 6940

This annex lists the patent family members relating to the patent documents cited in  the above-mentioned European search report.
The members are as contained in the European Patent Office EDP file on
The European Patent Office is in no way liable for these particulars which are merely given for the purpose of information.

18-07-2024

| Patent document cited in search report | Publication date | Patent family member(s) | Publication date |
|---|---|---|---|
| US 2021056365 A1 | 25-02-2021 | NONE | |

For more details about this annex : see Official Journal of the European Patent Office, No. 12/82